# EUROPÄISCHE PATENTSCHRIFT

(11) **EP 0 331 950 B1**
(45) Veröffentlichungstag und Bekanntmachung des Hinweises auf die Patenterteilung: **06.10.1993**
(21) Anmeldenummer: 89102834.2
(22) Anmeldetag: 18.02.1989
(51) Int. Cl.: A01F 25/20

(54) **Gerät zur Entnahme und zum Verteilen von Silagefutter aus Flachsilos**
Device for dispensing and distributing silage from flat silos
Dispositif de prélèvement et de distribution de silage d'un silo plat

(30) Priorität: 05.03.1988 DE 3807228; 18.10.1988 DE 3835431
(43) Veröffentlichungstag der Anmeldung: 13.09.1989
(73) Patentinhaber: B. Strautmann & Söhne GmbH & Co., D-49196 Bad Laer (DE)
(72) Erfinder: Steffens, Josef, D-4834 Harsewinkel (DE); Kleine-Niesse, Richard, D-4543 Lienen (DE)
(74) Vertreter: Stracke, Alexander, Dipl.-Ing.

(56) Entgegenhaltungen:
- DD-A- 79 173
- DE-A- 1 482 182
- DE-A- 3 602 403
- FR-A- 2 591 420

## Beschreibung

Die vorliegende Erfindung betrifft ein Gerät zur Entnahme und zum Verteilen von Silagefutter aus Flachsilos, welches aus einem hinter einem landwirtschaftlichen Schlepper anbaubaren, von einer Transportstellung bis zu einer am boden liegenden Arbeiststellung höhenverstellbaren Laderaum besteht, an dessen Oberseite eine über das hintere Ende des Laderaumes hinausragende, hydraulisch verschwenkbare Schwinge mit einem an deren Ende schwenkbar gelagerten Schild angeordnet ist, wobei dieses Schild an seiner unteren Begrenzung mit Schneidmessern versehen ist, von denen mindestens eines oszillierend antreibbar ist.

Ein Gerät der gattungsgemäßen Art ist aus der FR-A-25 91 420 bzw. DE-A-36 02 403 bekannt.

Bei diesem Gerät sind für den Antrieb der Schneidmesser Hydraulikzylinder vorgesehen. Das Gerät nach der FR-A-25 91 420 weißt keinerlei Seitenschneideinrichtungen auf, so daß beim Eintauchen der mit den Schneidmessern ausgestatteten Schwinge in ein Flachsilo lediglich eine Schnittfläche erzeugt wird.

Aus der DE-A-14 82 182 ist eine Schneidvorrichtung mit oszillierend antreibbaren Messern bekannt, deren Antrieb für jedes antreibbare Schneidmesser aus auf einer antreibbaren Welle angebrachten Taumelscheiben besteht. Dabei sind die beiden Schneidmesser gegenläufig zueinander antreibbar. Diese Schneidvorrichtung ist für eine Mähmaschine vorgesehen.

Aus der DE-A-36 02 403 ist eine Vorrichtung zur Entnahme von Silage auf einem Fahrsilo bekannt, die mit Seitenschneideinrichtungen in Form von seitlichen, rotierenden Schneidscheiben ausgestattet ist.

Der vorliegenden Erfindung liegt die Aufgabe zugrunde, ein Gerät der gattungsgemäßen Art zu schaffen, welches bei einfachem und störunanfälligem Aufbau der Schneideinrichtung ein problemloses Entnehmen von Silagefutter aus einem Flachsilo ermöglicht. Diese Aufgabe wird erfindungsgemäß dadurch gelöst, daß der Antrieb für jedes antreibbare Schneidmesser aus auf einer antreibbaren Welle angebrachten Taumelscheiben besteht und daß an mindestens einer Seite des Schildes eine Seitenschneideinrichtung angeordnet ist, die aus jeweils zwei Seitenmessern besteht, von denen zumindest eines gegenüber der über das Schild hinaus vorstehenden Welle versetzt pendelnd am Schild gelagert und über einen auf der Welle angeordneten Exzenter oszillierend antreibbar ist.

Durch die erfindungsgemäße Konstruktion werden verschiedene Vorteile gegenüber dem vorbekannten Stand der Technik erzielt. Zum einen ist die Konstruktion in ihrem Aufbau äußerst einfach und demzufolge auch kostengünstig und auch äußerst störunanfällig.

Zum anderen wird sowohl für die Schneideinrichtung am Schild wie auch bei der Seitenschneideinrichtung ein Doppelmesser mit vorteilhaften Schnitteigenschaften bei Silagefutter verwendet.

Zum anderen wird durch das oszillierende Antreiben zumindest eines der Seitenmesser ein kurzer Hub für die Schneidbewegung erzielt.

Vorteilhaft ist außerdem, daß sowohl für den Antrieb der Schneidmesser des Schildes wie auch für den Antrieb der Seitenmesser lediglich ein Antriebssystem benötigt wird.

Weitere Merkmale der Erfindung sind Gegenstand von Unteransprüchen.

Ausführungsbeispiele der Erfindung sind in den beigefügten Zeichnungen dargestellt, die im folgenden näher beschrieben werden.

Es zeigen:
- Figur 1: eine Seitenansicht eines Gerätes zur Entnahme und zum Verteilen von Silagefutter aus Flachsilos in Arbeitsstellung,

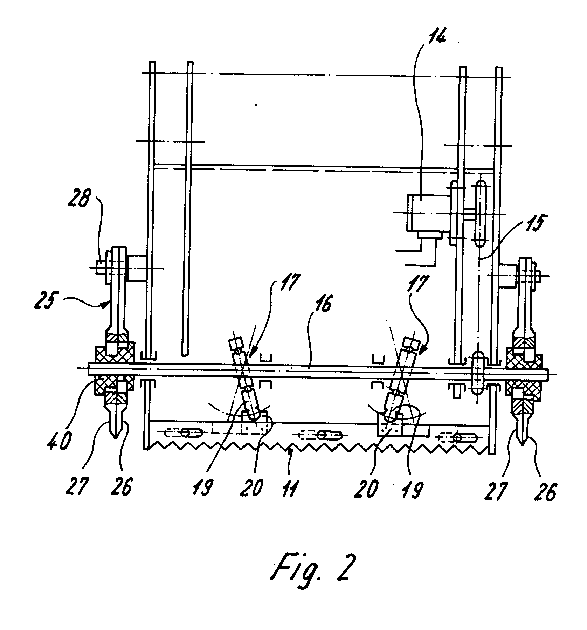

- Figur 2: eine Rückansicht des Schildes des Geräte nach Figur 1

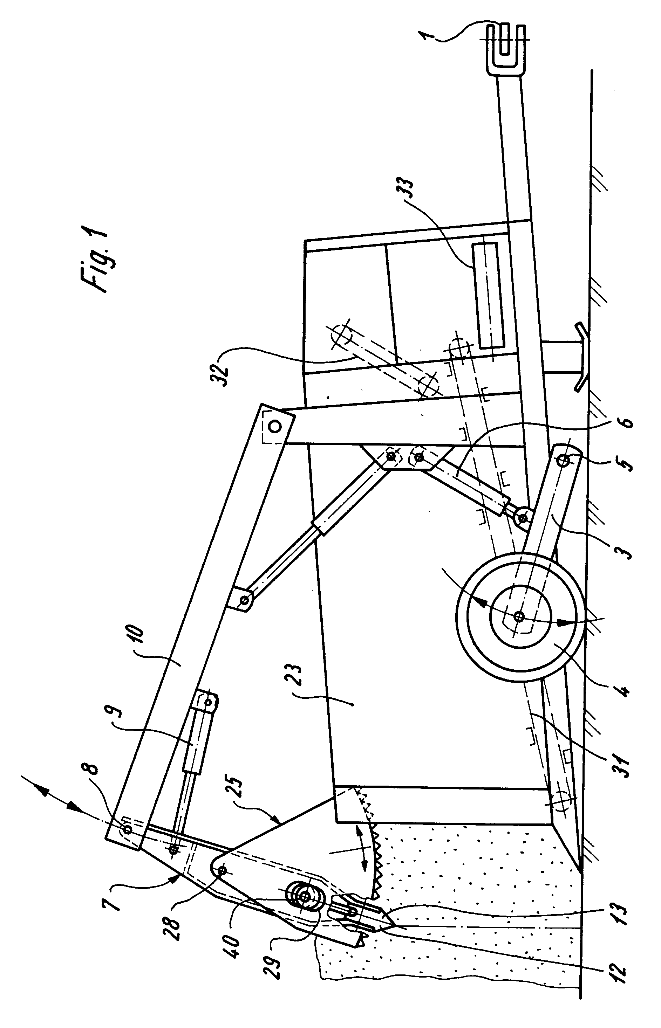

Das in Figur 1 gezeigte Gerät zur Entnahme und zum Verteilen von Silagefutter wird vorzugsweise hinter einem nicht weiter dargestellten landwirtschaftlichen Schlepper , beispielsweise an dessen angedeuteter Ackerschiene 1 angehängt. Entsprechende Ausführungen für den Anbau direkt an die Dreipunkt-Hydraulik eines Schleppers sind möglich.

Zur Aufnahme von Silagefutter wird das gesamte Gerät rückwärts an einen Flachsilo 2 gefahren, wobei es dort durch verschwenken von an Achsschwingen 3 gelagerten Laufrädern 4 um eine Drehachse 5 der Achsschwingen mittels Hydrozylindern 6 vor dem Einfahren in den Flachsilo in die abgesenkte und dargestellte Arbeitsstellung gebracht worden ist.

Das Gerät umfaßt im wesentlichen einen Laderaum 23 und einen an dessen Oberseite über dessen hinteres Ende hinausragendes Schild 7. Dieses Schild 7 ist an einer Schwinge 10, die insgesamt schwenkbar ist, um einen Drehpunkt 8 schwenkbar angeschlossen, wobei zur Schwenkung des Schildes 7 ein Hydrozylinder 9 vorgesehen ist.

An der Unterseite des Schildes 7 ist ein Doppelmesserpaar 11, bestehend aus zwei gegenläufig oszillierenden Messern 12 und 13 angebracht.

Dieses Doppelmesserpaar 11 wird von einem Hydromotor 14 unter Zwischenschaltung eines Kettenvorgeleges 15 od. dgl. über eine Welle mit hierauf angeordneten Taumelscheiben 17 angetrieben, wobei die Taumelscheiben 17 mit Taumelarmen 19 versehen sind, die in eine Tasche eines Lagerbockes 20 der beiden Messer 12 und 13 eingreifen.

Der Lagerbock 20 ist jeweils fest mit einem Messer 12 bzw. 13 verbunden. Jedes Messer 12 ober 13 weist in dem Bereich, in dem sein gegenüberliegendes Messer 12 bzw. 13 einen Lagerbock 20 trägt, eine entsprechende Aussparung auf.

Im dargestellten Ausführungsbeispiel sind an beiden Seiten des Schildes 7 Seitenschneideinrichtungen angeordnet, die aus je einem Messerpaar 25 mit Seitenmessern 26 und 27 bestehen.

Diese Doppelmesserpaare 25 sind schwenkbar in einem Drehpunkt 28 am Schild 7 angeschlossen. Unterhalb dieses Drehpunktes 28 greift die Welle 16 über einen Doppelexenter 40 in entsprechend gestaltete Schlitze 29 der Seitenmesser 26 und 27 ein. Wird die Welle 16 angetrieben, so erfolgt über die Doppelexenter 40 ein gegenläufig oszillierender Antrieb der beiden Seitenmesser 26 und 27 der beiden Messerpaare 25.

Es ist auch denkbar, lediglich eines der Seitenmesser 26 oder 27 anzutreiben und das jeweils andere Seitenmesser 26 oder 27 fest anzuordnen. In diesem Falle wird ein einfacher Exzenter auf der Welle 16 angeordnet, der dann in einen entsprechenden Schlitz 29 des antreibbaren Messers eingreift.

## Patentansprüche

1. Gerät zur Entnahme und zum Verteilen von Silagefutter aus Flachsilos, welches aus einem hinter einem landwirtschaftlichen Schlepper anbaubaren, von einer Transportstellung bis zu einer am Boden liegenden Arbeitsstellung höhenverstellbaren Laderaum (23) besteht, an dessen Oberseite eine über das hintere Ende des Laderaumes (23) hinausragende, hydraulisch verschwenkbare Schwinge mit einem an deren Ende schwenkbar gelagerten Schild (7) angeordnet ist, wobei dieses Schild (7) an seiner unteren Begrenzung mit Schneidmessern (12, 13) versehen ist, von denen mindestens eines oszillierend antreibbar ist, **dadurch gekennzeichnet,** daß der Antrieb für jedes antreibbare Schneidmesser (12, 13) aus auf einer antreibbaren Welle (16) angebrachten Taumelscheiben (17) besteht und daß an mindestens einer Seite des Schildes (7) eine Seitenschneideinrichtung angeordnet ist, die aus jeweils zwei Seitenmessern (26, 27) besteht, von denen zumindest eines gegenüber der über das Schild (7) hinaus vorstehenden Welle (16) versetzt pendelnd am Schild (7) gelagert und über einen auf der Welle (16) angeordneten Exzenter ozillierend antreibbar ist.

2. Gerät nach Anspruch 1, dadurch gekennzeichnet, daß beide Seitenmesser (26,27) pendelnd am Schild (7) gelagert und jeweils über einen in Schlitze (29) der beiden Seitenmesser (26,27) eingreifende Doppelexzenter (40) antreibbar sind.

3. Gerät nach Anspruch 1 oder 2, dadurch gekennzeichnet, daß die Seitenmesser (26,27) segmentförmig ausgebildet sind.

4. Gerät nach einem oder mehreren der Ansprüche 1 bis 3, dadurch gekennzeichnet, daß auf der Welle (16) als Antrieb für jedes antreibbare Schneidmesser (12,13) des Schildes (7) in an sich bekannter Weise Taumel - scheiben (17) vorgesehen sind.

5. Gerät nach einem oder mehreren der Ansprüche 1 bis 4, dadurch gekennzeichnet, daß als Antrieb für die Welle (16) ein Hydromotor (14) vorgesehen ist.

6. Gerät nach Anspruch 5, dadurch gekennzeichnet, daß zwischen dem Hydromotor (14) und der Welle (16) ein Kettenvorgelege (15) oder dergleichen angeordnet ist.

## Claims

1. Apparatus for removing and distributing silage fodder from flat silos, comprising a load chamber (23) which can be attached behind an agricultural tractor and which is displaceable in respect of height from a transportation position to a working position of lying on the ground and at the top side of which is arranged a hydraulically pivotable rocking arm which projects beyond the rear end of the load chamber (23) and which has a plate (7) mounted pivotably at the end of the rocking arm, wherein said plate (7) is provided at its lower edge portion with cutting blades (12, 13) of which at least one is oscillatingly drivable, characterised in that the drive for each drivable cutting blade (12, 13) comprises swash plates (17) mounted on a drivable shaft (16) and that arranged at at least one side of the plate (7) is a side cutting means which respectively comprises two side blades (26, 27) of which at least one is mounted on the plate (7) swingingly in displaced relationship with the shaft (16) projecting beyond the plate (7), and is oscillatingly drivable by way of an eccentric arranged on the shaft (16).

2. Apparatus according to claim 1 characterised in that both side blades (26, 27) are mounted swingingly on the plate (7) and are respectively drivable by way of a double eccentric (40) engaging into slots (29) in the two side blades (26, 27).

3. Apparatus according to claim 1 or claim 2 characterised in that the side blades (26, 27) are of a segment-shaped configuration.

4. Apparatus according to one or more of claims 1 to 3 characterised in that swash plates (17) are provided in per se known manner on the shaft (16) as a drive for each drivable cutting blade (12, 13) of the plate (7).

5. Apparatus according to one or more of claim 1 to 4 characterised in that a hydraulic motor (14) is provided as the drive for the shaft (16).

6. Apparatus according to claim 5 characterised in that a chain transmission (15) or the like is arranged between the hydraulic motor (14) and the shaft (16).

## Revendications

1. Dispositif pour le prélèvement et la répartition de fourrage ensilé, depuis des silos plats, lequel est constitué d'un espace de chargement (23) pouvant être monté derrière un tracteur agricole, pouvant être déplacé en hauteur, depuis une position de transport jusqu'à une position de travail située au sol, sur le côté supérieur duquel est monté un bras oscillant, pouvant pivoter par des moyens hydrauliques, faisant saillie au-delà de l'extrémité arrière de l'espace de chargement (23), avec une plaque (7) montée de manière à pouvoir pivoter à son extrémité, ladite plaque (7) étant pourvue, en sa limite inférieure, de couteaux (12, 13), parmi lesquels l'un au moins peut être entraîné de manière oscillante, caractérisé en ce que l'entraînement pour chaque couteau (12, 13) pouvant être entraîné est constitué de plateaux oscillants (17) montés sur un arbre (16) pouvant être entraîné et qu'est disposé, sur au moins l'un des côtés de la plaque (7), un dispositif de coupe latéral, qui est constitué respectivement de deux couteaux latéraux (26, 27), parmi lesquels au moins l'un est monté de manière pendulaire sur la plaque (7), en étant décalé par rapport à l'arbre (16) s'avançant au-delà de la plaque (7), et peut être entraîné de manière oscillante par l'intermédiaire d'un excentrique monté sur l'arbre (16).

2. Dispositif selon la revendication 1, caractérisé en ce que les deux couteaux latéraux (26, 27) sont montés de manière pendulaire sur la plaque (7) et peuvent chacun être entraînés par un double excentrique (40) venant en prise dans des fentes (29) des deux couteaux latéraux (26, 27).

3. Dispositif selon l'une quelconque des revendications 1 ou 2, caractérisé en ce que les couteaux latéraux (26, 27) sont conçus en forme de segments.

4. Dispositif selon l'une quelconque des revendications 1 à 3, caractérisé en ce que des plateaux oscillants (17) sont prévus, d'une manière connue en soi, sur l'arbre (16), pour entraîner chaque couteau (12, 13) pouvant être entraîné, de la plaque (7).

5. Dispositif selon l'une quelconque des revendications 1 à 4, caractérisé en ce qu'un moteur hydraulique (14) est prévu pour entraîner l'arbre (16).

6. Dispositif selon la revendication 5, caractérisé en ce que une transmission par chaîne (15) ou similaire est disposée entre le moteur hydraulique (14) et l'arbre (16).
